# EUROPEAN PATENT APPLICATION

(11) **EP 1 501 011 A2**
(43) Date of publication of application: **26.01.2005**
(21) Application number: 04252927.1
(22) Date of filing: 18.05.2004
(51) Int. Cl.: G06F 9/44

(54) **Method and apparatus for generating a graphical user interface**

(30) Priority: 02.06.2003 US 452686
(71) Applicant: LUCENT TECHNOLOGIES INC., Murray Hill, New Jersey 07974-0636 (US)
(72) Inventor: Kwong, Man K., Naperville Illinois 60564 (US); Suen, Lai-Cherng, Naperville Illinois 60565 (US)
(74) Representative: Watts, Christopher Malcolm Kelway, Dr.

(57) **Abstract**

Within a program, abbreviated data is established corresponding to a plurality of components of a graphical user interface. The abbreviated data abstracts a complete path name corresponding to each one of the plurality of components. During execution of the program, a pre-processor of an apparatus is invoked to automatically generate from the abbreviated data, a code in a predetermined native language. The code in one example comprises a location for each one of the plurality of components. The pre-processor determines the location for each one of the plurality of components based on a location of the abbreviated data corresponding to each one of the plurality of components. A display of the graphical user interface is generated from the code.

## Description

### TECHNICAL FIELD

The invention relates generally to the generation of a graphical user interface and more specifically to abstracting a location of a component of the graphical user interface.

### BACKGROUND

When developing a Graphical User Interface ("GUI"), considerable time is devoted to describing a layout of a plurality of components that comprise the GUI. A geometry manager, for example, a pack geometry manager, comprises one method employed by a user to describe the layout of the plurality of components, or "widgets", in the GUI. The pack geometry manager employs invisible containers, called frames that are packed with a number of widgets and/or sub-containers, arranged in a single file, either vertically or horizontally. The whole GUI window is the largest root container.

Each widget or sub-frame and each respective containing frame (which contains the former) comprises a relation analogous to that of a file and an associated directory in a UNIX file system structure. With respect to this relation, widgets and frames form a tree structure starting with the GUI Window as the root of the tree. Each widget or frame is referenced by a complete path name (which starts with the root window, runs through each containing frame, and ends at the widget), as is understood by those skilled in the art.

When making a change to the layout, for example, moving a button from a first container to a second container of the GUI, the complete path names associated with the one or more components effected must be updated. Unfortunately, where the geometry manager requires the complete path names to refer to the one or more components effected by the change, the complete path names becomes very time-consuming and hard to maintain, as is appreciated by those skilled in the art.

Therefore, a need exists to abstract the generation of the layout of the plurality of components of the GUI.

### SUMMARY

The invention in one embodiment encompasses a method. Data is established corresponding to a plurality of components of a graphical user interface. From the data, a code is automatically generated in a predetermined native language. A display of the graphical user interface is generated from the code.

Another embodiment of the invention encompasses an apparatus. The apparatus comprises a pre-processor that generates a code in a predetermined native language from data corresponding to a plurality of components of a graphical user interface.

Yet another embodiment of the invention encompasses an article. The article comprises one or more computer-readable signal-bearing media. The article comprises means in the one or more media for establishing data corresponding to a plurality of components of a graphical user interface. The article comprises means in the one or more media for automatically generating from the data, a code in a predetermined native language. The article comprises means in the one or more media for generating from the code a display of the graphical user interface.

### DESCRIPTION OF THE DRAWINGS

Features of exemplary implementations of the invention will become apparent from the description, the claims, and the accompanying drawings in which:
FIG. 1 is a representation of one exemplary implementation of an apparatus that comprises a software program, an embedded pre-processor, a geometry manager, and a Graphical User Interface ("GUI").
FIG. 2 is a representation of a flow chart of one or more steps of the apparatus of FIG. 1.
FIG. 3 is a representation of a flow chart of one or more steps of the embedded pre-processor of the apparatus of FIG. 1.
FIG. 4 is a representation of a flow chart of one or more steps of the construction of a complete path name of the apparatus of FIG. 3.

### DETAILED DESCRIPTION

The particular values and configurations discussed in these non-limiting examples can be varied and are cited merely to illustrate an embodiment of the present invention and are not intended to limit the scope of the invention.

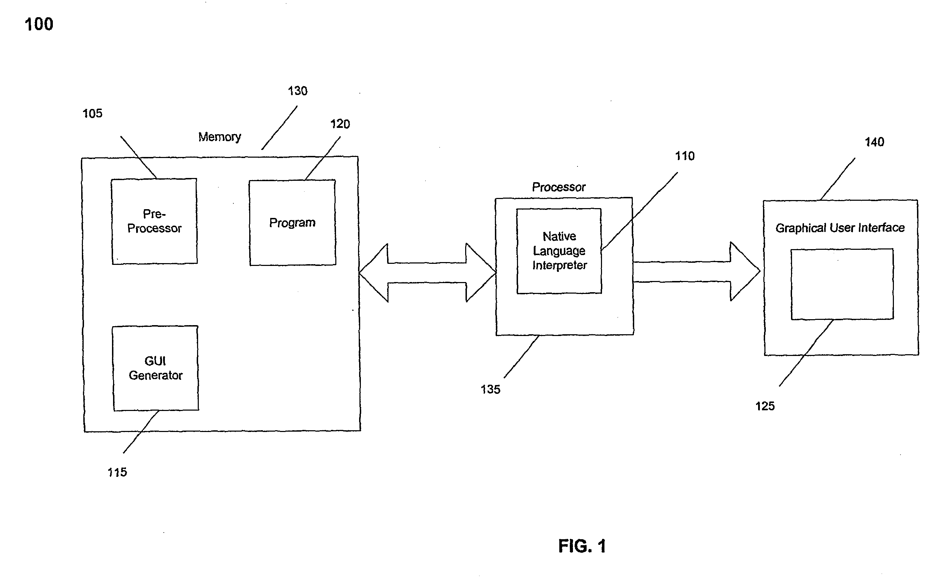

Referring to FIG. 1, the apparatus 100 in one embodiment comprises a pre-processor 105, a native language interpreter 110, a Graphical User Interface ("GUI") generator 115, a program 120, a GUI 125, a storage device 130, a processor 135, and an output device 140. The processor 135 employs the native language interpreter 110 to execute the program 120. The native language interpreter 110 invokes the pre-processor 105 and the GUI generator 115. The GUI generator 115 generates the GUI 125 displayed on the output device 140.

The program 120 in one example comprises a plurality of configuration data, one or more native language code statements, and one or more GUI commands. The plurality of configuration data describe a plurality of layouts of a plurality of components of a plurality of GUIs 125. A configuration data of the plurality of configuration data comprises an abbreviated syntax and/or a plurality of native language code statements. The abbreviated syntax in one example describes each one of a plurality of components, such as widgets and frames, of the GUI 125. The organization of the abbreviated syntax associated with each one of the plurality of component within the configuration data determines the location for each one of the plurality of components of the GUI 125 in relation to the plurality of components of the GUI 125.

For example, the plurality of components described in the configuration data comprises a relation analogous to a UNIX file system structure. Each one of the plurality of components is associated with a parent component. The configuration data allows a designer of the GUI 125 to describe the layout of the GUI 125 in a format that closely resembles the layout of the GUI 125, in other words, to describe the layout of the plurality of components of the GUI 125 in a tree structure format.

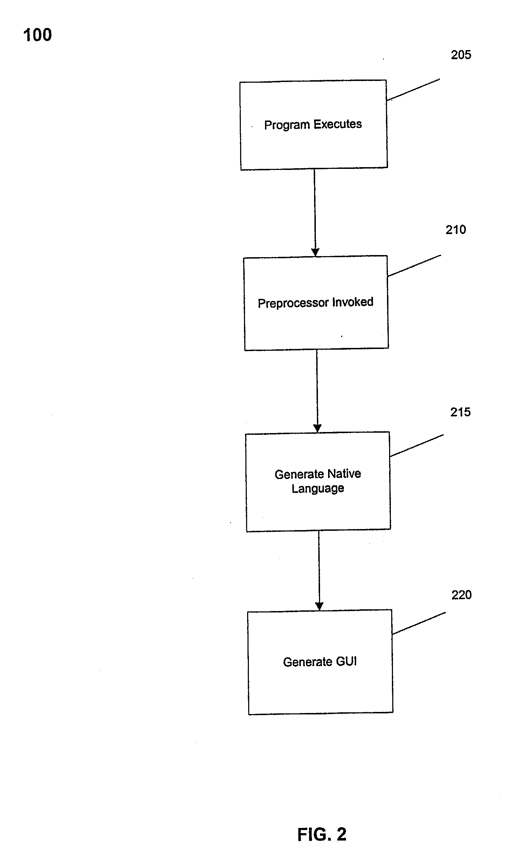

Referring to FIG.2, in STEP 205, the processor 135 invokes the native language interpreter 110, for example, a perl interpreter, to execute the program 120. The native language interpreter 110 interprets the one or more native language code statements. In STEP 210, the native language interpreter 110 encounters a first GUI command, for example, a mk_gui command, and invokes the pre-processor 105 to automatically generate a code in a predetermined native language, for example, perl, from the configuration data.

In STEP 215, the pre-processor 105 parses the configuration data to generate the code in the predetermined native language. In STEP 220, the native language interpreter 110 invokes the GUI generator 115 to generate the GUI 125 from the code. The GUI 125 is displayed on the output device 140, for example, a computer monitor.

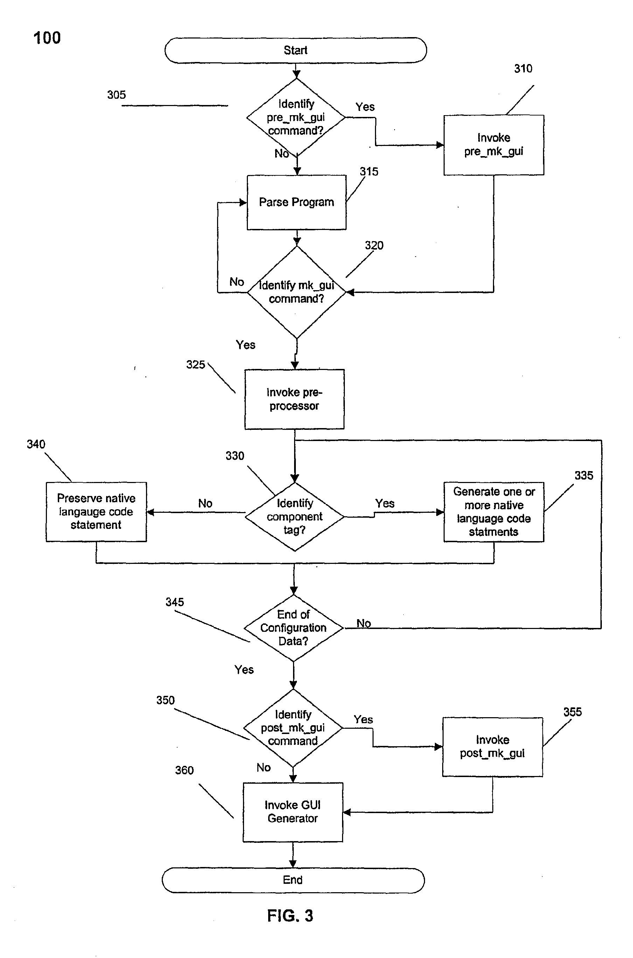

Turning to FIG. 3, in STEP 305 the native language interpreter 110 parses the program 120 for a second GUI command, for example, a pre_mk_gui command. In STEP 310, if the native language interpreter 110 identifies the second GUI command, the native language interpreter 110 invokes a first subroutine to process the configuration data of the program 120. The first subroutine in one example comprises a first user-defined subroutine to manipulate the configuration data. For example, the first user-defined subroutine serves to replace user-defined keywords in the configuration data before execution by the pre-processor 105, as is appreciated by those skilled in the art.

In STEPS 315 and 320, the native language interpreter 110 parses the program 120 for the one or more GUI commands. In STEP 325, if the native language interpreter110 identifies the first GUI command, the native language interpreter 110 invokes the pre-processor 105 on the configuration data

In STEP 330, the pre-processor 105 parses the one or more native language code statements and the abbreviated syntax of the configuration data for one or more component tags associated with the plurality of components of the GUI 125. In STEP 335, if the pre-processor 105 identifies one component tag of the configuration data, the pre-processor 105 generates the one or more native language code statements associated with the one component of the GUI 125. In STEP 340, if the pre-processor 105 does not identify the one component tag, the pre-processor 105 identifies one native language code statement of the plurality of native language code statements and preserves the one native language code statement of the configuration data.

In STEP 345, the pre-processor 105 serves to repeat STEPS 330 through 340 until the pre-preprocessor 105 identifies an end of the configuration data and execution of the program 120 by the native language interpreter 110 continues. The pre-processor 105 generates the code in the native language from the one or more native language code statements generated by the pre-processor 105.

In STEP 350, the native language interpreter 110 continues to parse the program 120. In STEP 355, if the native language interpreter 110 identifies a third GUI command, for example, a post_mk_gui command, the native language interpreter 110 invokes a second subroutine e to process the code in the native language generated by the pre-processor 105. The second subroutine in one example comprises a second user-defined subroutine to manipulate the code. For example, the second user-defined subroutine serves to add further customizations to the code generated by the native language interpreter 110 from the abbreviated data, as is appreciated by those skilled in the art. For example, when the third GUI command is omitted, the native language interpreter 110 generates a widget with a default color, for example, red. When the third GUI command is specified, the second user-defined subroutine changes the default color to blue.

In STEP 360, the native language interpreter 110 invokes the GUI generator 115, such as Tk toolkit, on the code. The GUI generator 115 serves to generate the GUI 125. The one or more native language code statements generated by the pre-processor 105 comprise one or more complete path names. The pre-processor 105 employs a concept of juxtaposition to describe a location of the one component in the layout of the GUI. The concept of juxtaposition comprises determining a first location of the one component based on where the one component is described in the configuration data relative to where a second component is described in the configuration data.

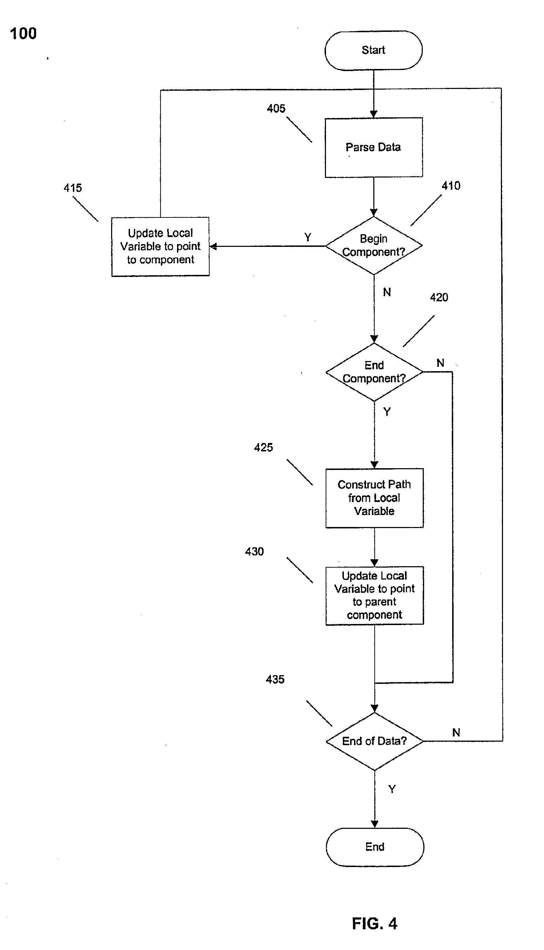

Referring to FIG. 4, the pre-processor 105 determines a location in the layout of the one component of the GUI 125 from a placement of the abbreviated syntax associated with the one component in relation to a plurality of placements of the abbreviated syntax associated with the plurality of components of the GUI 125. In STEPS 405 and 410, the pre-processor 105 parses the configuration data for the one or more component tags. In STEP 415, if the pre-processor 105 encounters a beginning component tag referring to a frame, the pre-processor 105 updates a local variable to refer to the one component. The beginning component tag indicates the beginning of the abbreviated syntax associated with the one component. The pre-processor 105 repeats STEPS 405 thru 415 until encountering a respective ending component tag of the same frame, as is analogous to traversing the tree structure of the UNIX file system structure.

In STEP 420, the pre-processor 105 encounters the ending component tag indicating the end of the abbreviated syntax associated with the one component. In STEP 425, the pre-processor 105 employs the local variable to construct the complete path name associated with the one component. In STEP 430, the pre-processor 105 automatically updates the local variable to refer to the parent component associated with the one component, as understood by those skilled in the art.

In STEP 435, the pre-processor 105 repeats STEPS 405 thru 430 constructing the complete path name for each one of the plurality of components until an end of the configuration data is encountered. The pre-processor 105 in one example stores the code in the native language in the storage device 130.

The steps or operations described herein are just exemplary. There may be many variations to these steps or operations without departing from the spirit of the invention. For instance, the steps may be performed in a differing order, or steps may be added, deleted, or modified.

The apparatus 100 employs at least one computer-readable signal-bearing medium. One example of a computer-readable signal-bearing medium for the apparatus 100 comprises an instance of a recordable data storage medium such as one or more of a magnetic, electrical, optical, biological, and atomic data storage medium. The recordable data storage medium in one example comprises the storage devices 101 and 201. In another example, a computer-readable signal-bearing medium for the apparatus 100 comprises a modulated carrier signal transmitted over a network comprising or coupled with the apparatus 100, for instance, one or more of a telephone network, a local area network ("LAN"), the internet, and a wireless network. An exemplary component of the apparatus 100 employs and/or comprises a set and/or series of computer instructions written in or implemented with any of a number of programming languages, as will be appreciated by those skilled in the art.

Although exemplary implementations of the invention have been depicted and described in detail herein, it will be apparent to those skilled in the relevant art that various modifications, additions, substitutions, and the like can be made without departing from the spirit of the invention and these are therefore considered to be within the scope of the invention as defined in the following claims.

## Claims

1. A method comprising, the steps of:
establishing data corresponding to a plurality of components of a graphical user interface;
automatically generating from the data, a code in a predetermined native language; and
generating from the code a display of the graphical user interface.

2. The method of claim 1, further comprising the step of automatically generating from the data a complete path for each one of the plurality of components.

3. The method of claim 1, wherein the step of automatically generating further comprises the steps of:
identifying from within the data, one or more identifiers associated with each one of the plurality of components;
associating the one or more identifiers with one or more statements in the predetermined native language;
constructing a complete path in the predetermined native language to each one of the plurality of components; and
generating the code in the predetermined native language from the one or more statements and the complete path.

4. The method of claim 1, wherein the step of automatically generating further comprises the steps of:
employing in the data, an abbreviated syntax to describe each one of the plurality of components of the GUI;
determining from the abbreviated syntax a location for one component of the plurality of components in relation to a plurality of locations of the plurality of components of the GUI, respectively;
generating the code in the predetermined native language from the plurality of locations for each one of the plurality of components.

5. The method of claim 4, further comprising the steps of:
organizing in the data, the abbreviated syntax associated with each one of the plurality of components of the GUI in relation to the plurality of component of the GUI;
determining the location for the one component of the GUI from a placement of the abbreviated syntax associated with the one component in relation to a plurality of placements of the abbreviated syntax associated with the plurality of components; and
generating the code from the location of the one component of the GUI.

6. An apparatus, comprising:
a pre-processor that generates a code in a predetermined native language from data corresponding to a plurality of components of a GUI.

7. The apparatus of claim 6, wherein the pre-processor is written in the predetermined native language, wherein the data comprises an abbreviated syntax and a plurality of native language code statements, wherein the abbreviated syntax comprises a plurality of identifiers that describe the plurality of components of the GUI;
wherein the abbreviated syntax comprises an organization that defines a placement of one component in relation to the plurality of components;
wherein the pre-processor generates the code in the predetermined native language from the plurality of identifiers and the organization of the abbreviated syntax;
wherein the pre-processor preserves the plurality of native language code statements of the data.

8. The apparatus of claim 6, further comprising:
a GUI generator that generates from the code in the predetermined native language, a display of the GUI.

9. The apparatus of claim 6, wherein the pre-processor is embedded within a program, wherein the program comprises the data, further comprising:
a native language interpreter that serves to execute the program; and
wherein upon execution of a first GUI command in the program, the native language interpreter serves to invoke the pre-processor on the data.

10. The apparatus of claim 6, further comprising a path generator and a keyword generator;
wherein the path generator maintains a plurality of complete paths in the predetermined native language to each one of the plurality of components of the GUI; and
wherein the keyword generator translates the data into one or more statements in the predetermined native language;
wherein the pre-processor employs the path generator and the keyword generator to generate the code from each one of the plurality of complete path and the one or more statements in the predetermined native language.
